# EUROPÄISCHE PATENTSCHRIFT

(11) **EP 2 238 406 B1**
(45) Veröffentlichungstag und Bekanntmachung des Hinweises auf die Patenterteilung: **13.01.2016**
(21) Anmeldenummer: 09706417.4
(22) Anmeldetag: 20.01.2009
(51) Int. Cl.: G01B 7/14

(54) **SONDE FÜR EINE KAPAZITIVE SENSOREINRICHTUNG UND SPALTMESSSYSTEM**
PROBE FOR A CAPACITIVE SENSOR DEVICE AND GAP-MEASURING SYSTEM
SONDE POUR DISPOSITIF DE DÉTECTION CAPACITIF ET SYSTÈME DE MESURE DE DISTANCE ENTRE DES ÉLÉMENTS

(30) Priorität: 30.01.2008 DE 102008006833
(43) Veröffentlichungstag der Anmeldung: 13.10.2010
(73) Patentinhaber: MTU Aero Engines AG, 80995 München (DE)
(72) Erfinder: SCHNEIDER, René, 81549 München (DE); ECKER, Alfred, 80997 München (DE); HEIDER, Gerhard, 86568 Hollenbach (DE)
(86) Internationale Anmeldenummer: PCT/DE2009/000063
(87) Internationale Veröffentlichungsnummer: WO 2009/094985

(56) Entgegenhaltungen:
- DE-T2-602004 004 909
- US-A- 4 804 905
- US-A- 4 950 084
- US-A- 5 166 626
- US-A- 5 760 593

## Beschreibung

Die Erfindung betrifft eine Sonde für eine kapazitive Sensoreinrichtung nach dem Oberbegriff des Anspruchs 1, wie beispielsweise aus einer der Druckschriften US 5,166,626, DE 60 2004 004 909 T2, US 4,804,905 oder US 5,760,593 bekannt ist.

Derartige Sonden sind bereits aus dem Stand der Technik als bekannt und werden in unterschiedlichsten industriellen Messanwendungen eingesetzt. Mit derartigen Sonden werden Abstände von relativ zueinander beweglichen Teilen, wie Bauteilen von Maschinen, insbesondere Turbomaschinen allerart, gemessen. Insbesondere beeinflusst bei Turbomaschinen die Größe des Abstandes bzw. Spaltes zwischen einer Rotorschaufel und dem umgebenden Gehäuse die so genannten Leckverluste, die wiederum unmittelbar auf den Wirkungsgrad der Maschinen durchschlagen. Kapazitive Sonden sind aus der DE 34 33 351 C1 und der EP 0 246 576 B1 bekannt. Diese Sonden weisen einen triaxialen Aufbau auf und werden insbesondere zur Messung des Spalts zwischen einem Gehäuse und entsprechenden Laufschaufeln in Fluggasturbinen verwendet, wobei das Laufzeitsignal der Sonden zur berührungslosen Schaufelschwingungsmessung benutzt wird. Aufgrund des triaxialen Aufbaus dieser bekannten Sonden und des dadurch bedingten Umschließens unterschiedlicher Materialien wie z. B. Keramik und Metall bzw. Metall-Legierungen mit unterschiedlichen Temperaturausdehnungskoeffizienten kann es beim Einsatz derartiger Sonden bei höheren Temperaturen zu Rissen kommen. Insbesondere beim Einsatz derartiger Sonden in Gasturbinen von Flugtriebwerken werden Lebensdauern von 10.000 Stunden und mehr gefordert, in welchen die Sonden verlässliche Rotorspaltmesswerte liefern müssen. Dabei ist die Sonde in Abhängigkeit der konkreten Ausgestaltung der Strömungsmaschine variierenden Temperaturen bis über 700° C, hohen Drücken, Schwingungen und weiteren Belastungen durch Wasser, Salz, Öl, Schmutz, metallischem Abrieb und dergleichen ausgesetzt. Zur Vermeidung von temperaturbedingten Spannungsrissen wird in der DE 60 2004 004 909 T2 ein Sensor zur kapazitiven Messung des Abstandes zu einem ortsfesten oder einem vorüberziehenden Objekt offenbart, bei dem alle Elemente aus elektrisch leitfähigen oder elektrisch nicht leitfähigen keramischen Materialien ausgebildet sind und diese so gewählt sind, dass sie ähnliche thermische Ausdehnungskoeffizienten besitzen. Nachteilig an diesem Sensor ist jedoch, dass einerseits die Materialauswahl sehr eingeschränkt ist und dadurch die Konstruktion und Herstellung dieses Sensors aufwendig und teuer ist und zudem aufgrund der eingeschränkten Materialauswahl die Messgenauigkeit des Sensors nicht über die gesamte Lebensdauer des Sensors gewährleistet ist.

Aufgabe der vorliegenden Erfindung ist es daher, eine Sonde und ein Spaltmesssystem der eingangs genannten Art bereitzustellen, welche bei hohen Temperaturen einsatzfähig sind und eine hohe Messgenauigkeit sowie eine hohe Lebensdauer gewährleisten.

Die Aufgabe wird erfindungsgemäß durch eine Sonde mit den Merkmalen des Patentanspruchs 1 gelöst.

Vorteilhafte Ausgestaltungen sind in den abhängigen Ansprüchen angegeben.

Eine erfindungsgemäße Sonde für eine kapazitive Sensoreinrichtung weist eine Außenhülse und mindestens einen innerhalb der Außenhülse angeordneten Sondenkopf auf, wobei der Sondenkopf aus einem Messelement mit mindestens einer Mess- und Stirnfläche, wobei das Messelement aus einem Metall, einer Metall-Legierung oder einer elektrisch leitfähigen Keramik besteht oder zumindest an der Mess- und Stimfläche mit einem Metall, einer Metall-Legierung oder einer elektrisch leitfähigen Keramik beschichtet ist. Ferner umfasst die Sonde ein erstes, elektrisch nicht-leitendes Isolatorelement sowie ein erstes Teilelement einer ersten Abschirmung, wobei das erste Teilelement aus einem Metall, einer Metall-Legierung oder einer elektrisch leitfähigen Keramik besteht. Dabei sind das Messelement, das erste Isolatorelement und das erste Teilelement der ersten Abschirmung stoffschlüssig miteinander zu einem Schichtpaket verbunden, wobei das erste Isolatorelement zwischen dem Messelement mit der Mess- und Stirnfläche und dem ersten Teilelement angeordnet ist, wobei das Messelement, das erste Isolatorelement und das erste Teilelement bezüglich einer Längsachse der Sonde koaxial sowie axial aufeinander folgend ohne gegenseitige axiale Überlappung angeordnet sind. Ferner ist zwischen dem Innenumfang der Außenhülse und dem Sondenkopf ein radial umlaufender Spalt ausgebildet. Durch den erfindungsgemäßen geschichteten Aufbau des Sondenkopfes und der stoffschlüssigen Verbindung der einzelnen Elemente des Sondenkopfes untereinander ist eine Temperaturdehnung der einzelnen Elemente nahezu ungehindert möglich. Insbesondere wird eine Ummantelung der elektrisch nicht-leitenden Materialien durch die elektrisch leitenden Materialien und umgekehrt vermieden, so dass auch bei unterschiedlichen Temperaturausdehnungskoeffizienten der Materialien es zu keinen Spannungsrissen kommen kann. Da keine kraft- oder formschlüssigen Verbindungen verwendet werden, ist die Sonde zudem über einen weiten Temperaturbereich mechanisch stabil. Durch die mögliche Verwendung von Metall oder Metall-Legierungen zur Ausbildung des Messelementes bzw. der Mess- und Stirnfläche des Messelementes ergibt sich eine hohe Messgenauigkeit gegenüber möglichen Kapazitätsänderungen. Durch die hohe mechanische Stabilität und die Möglichkeit der Temperaturdehnung der unterschiedlichen Materialien wird eine sehr hohe Lebensdauer der Sonde gewährleistet Die Schichtung des als Schichtpaket ausgebildeten Sondenkopfs kann ungefähr senkrecht zu einer Längsachse der Sonde ausgebildet sein.

In weiteren vorteilhaften Ausgestaltungen der erfindungsgemäßen Sonde ist der Sondenkopf in einer einem Teil der Sonde bildenden Abschirmhülse aus Metall, einer Metall-Legierung oder einer elektrisch leitfähigen Keramik angeordnet und von dieser umgeben, wobei die Abschirmhülse stoffschlüssig mit dem ersten Teilelement verbunden ist und zu dem Messelement und zumindest zu einem Teil des ersten Isolatorelements einen umlaufenden Radialspalt aufweist. Durch die Abschirmhülse wird der inhomogene Randbereich des elektrischen Felds von dem Sondenkopf, insbesondere der Mess- und Stirnfläche des Messelementes abgeschirmt. Dadurch ergibt sich zwischen der Sonde und einer der Mess- und Stirnfläche gegenüberliegenden Gegenelektrode ein annähernd paralleles elektrisches Feld, dessen Änderungen der Kapazität mit hoher Messgenauigkeit nachgewiesen werden können. Zudem werden randlich auftretende Störbereiche zuverlässig abgeschirmt. Des Weiteren kann die Sonde einen innerhalb der Außenhülse angeordneten Sondenkörper aufweisen, wobei der Sondenkörper ein zweites Teilelement mit der ersten Abschirmung bestehend aus einem Metall, einer Metall-Legierung oder einer elektrisch leitfähigen Keramik, ein zweites elektrisch nicht-leitendes Isolatorelement sowie ein erstes Teilelement einer zweiten Abschirmung aufweisen, wobei das erste Teilelement aus einem Metall, einer Metall-Legierung oder einer elektrisch leitfähigen Keramik besteht. Dabei sind das zweite Teilelement der ersten Abschirmung, das zweite Isolatorelement und das erste Teilelement der zweiten Abschirmung ebenfalls stoffschlüssig miteinander verbunden und als axiales Schichtpaket ausgebildet, wobei das zweite Isolatorelement axial zwischen dem zweiten Teilelement der ersten Abschirmung und dem ersten Teilelement der zweiten Abschirmung angeordnet ist. Durch eine derartige Ausgestaltung des Sondenkörpers ist wiederum eine hohe mechanische Stabilität des Sondenkörpers bzw. der Sonde insgesamt über einen weiten Temperaturbereich gewährleistet. Der geschichtete Aufbau des Sondenkörpers ermöglicht wiederum die nahezu ungehinderte Temperaturdehnung der einzelnen Elemente des Sondenkörpers, so dass temperaturbedingte Risse vermieden werden. Insbesondere wird wiederum eine Ummantelung der elektrisch nicht-leitenden Materialien durch die elektrisch leitenden Materialien und umgekehrt vermieden, so dass auch bei unterschiedlichen Temperaturausdehnungskoeffizienten der Materialien es zu keinen Spannungsrissen kommen kann.

In einer weiteren vorteilhaften Ausgestaltung der erfindungsgemäßen Sonde sind das erste Teilelement und das zweite Teilelement der ersten Abschirmung stoffschlüssig miteinander verbunden. Dies führt zu einer hohen mechanischen Stabilität dieser Verbindung zwischen dem Sondenkopf und dem Sondenkörper. Zudem ist es möglich, dass auch die Schichten des als Schichtpaket ausgebildeten Sondenkörpers ungefähr senkrecht zu der Längsachse der Sonde verlaufen.

In einer weiteren vorteilhaften Ausgestaltung der erfindungsgemäßen Sonde ist das erste Teilelement der zweiten Abschirmung mit einem zweiten Teilelement der zweiten Abschirmung zumindest teilweise stoffschlüssig verbunden, wobei das zweite Teilelement ebenfalls aus Metall, einer Metall-Legierung oder einer elektrisch leitfähigen Keramik besteht und als Halter für den Sondenkörper und den damit verbundenen Sondenkopf innerhalb der Außenhülse ausgebildet ist. Die stoffschlüssige Verbindung der Teilelemente der zweiten Abschirmung gewährleistet wiederum eine hohe mechanische Stabilität dieses Elementes über einen weiten Temperaturbereich. Des Weiteren kann das zweite Teilelement vorteilhafterweise mindestens eine, zumindest teilweise an seinem Außenumfang umlaufende Schulter zur Auflage auf mindestens eine am Innenumfang der Außenhülse ausgebildeten Vorsprung aufweisen. Dadurch ist eine sichere Verbindung und Positionierung der Sonde innerhalb der Außenhülse gewährleistet.

In einer weiteren vorteilhaften Ausgestaltung der erfindungsgemäßen Sonde ist zwischen dem Innenumfang der Außenhülse und der Abschirmhülse ein radial umlaufender Spalt ausgebildet. Zudem ist es möglich, dass sich der Spalt zumindest bis in den Bereich des zweiten Isolatorelementes erstreckt. Vorteilhafterweise unterstützt der radial umlaufende Spalt die Ausdehnungsmöglichkeiten der unterschiedlichen Materialien der Sonde, insbesondere des Sondenkopfs, des Sondenkörpers und der Abschirmhülse bei einer entsprechenden Temperatureinwirkung. Eine Temperaturdehnung ist ohne weiteres möglich, temperaturbedingte Spannungsrisse werden zuverlässig verhindert.

In weiteren vorteilhaften Ausgestaltungen der erfindungsgemäßen Sonde bestehen das erste und das zweite Isolatorelement aus einer nicht-leitfähigen Keramik, insbesondere AL₂O₃ oder Glas. Zudem können die Materialien für das Messelement mit der Mess- und Stirnfläche, die Elemente der ersten und zweiten Abschirmung sowie das erste und zweite Isolatorelement derart gewählt sein, dass sie ähnliche thermische Ausdehnungskoeffizienten besitzen. Auch durch diese Maßnahme wird möglichen temperaturbedingten Spannungsrissen innerhalb der Sonde vorgebeugt. Dabei kann insbesondere das Material für das Messelement mit der Mess- und Stirnfläche und die Elemente der ersten und zweiten Abschirmung eine Eisen-Nickel-Kobalt-Legierung mit einem geringen thermischen Ausdehnungskoeffizienten sein. Derartige Materialien sind z. B. unter den Handelsbezeichnungen Vacon 11 und ALLOY42 bekannt. Des Weiteren können die Elemente des Sondenkopfs und/oder die Elemente des Sondenkörpers vakuumgelötet sein, wobei bevorzugterweise als Lotmaterial Silber-Titan Verwendung findet. Alle anderen Verbindungen zwischen Elementen der Sonde können lasergeschweißt als ebenfalls stoffschlüssige Verbindung ausgebildet sein.

In einer weiteren vorteilhaften Ausgestaltung der erfindungsgemäßen Sonde ist diese mit einem Triaxialkabel verbunden, wobei ein Innenleiter des Triaxialkabels mit dem Messelement bzw. der Mess- und Stirnfläche, ein Mittelschirm des Triaxialkabels mit dem zweiten Teilelement der ersten Abschirmung und ein Außenschirm des Triaxialkabels mit dem zweiten Teilelement der zweiten Abschirmung elektrisch leitend verbunden sind. Dabei sind entlang der Längsachse der Sonde Durchtrittsöffnungen für den Durchtritt des Innenleiters, des Mittelschirms und des Außenschirms des Triaxialkabels ausgebildet. In einer vorteilhaften Ausgestaltung ist dabei im Bereich des ersten Isolatorelements und/oder dem ersten Teilelement der ersten Abschirmung der Durchmesser der Durchtrittsöffnung zumindest abschnittsweise größer als der Durchmesser des Innenleiters. Zudem ist es möglich, dass im Bereich des zweiten Isolatorelementes und/oder dem ersten Teilelement der zweiten Abschirmung der Durchmesser der Durchtrittsöffnung zumindest abschnittsweise größer ist als der Durchmesser des Mittelschirms. Durch die Durchschnittsvergrößerungen ist gewährleistet, dass das die Durchtrittsöffnungen umgebende Material bzw. die umgebenden Materialien sich relativ ungehindert bei Temperatureinwirkung ausdehnen können. Auch in diesen Bereichen der Sonde wird daher einer möglichen Rissbildung durch unterschiedliche Temperaturausdehnungskoeffizienten der Materialien der einzelnen Elemente zuverlässig entgegengewirkt.

In einer weiteren vorteilhaften Ausgestaltung der erfindungsgemäßen Sonde ist die an dem der Mess- und Stirnfläche abgewandten Ende des zweiten Teilelements der zweiten Abschirmung angeordnete Durchtrittsöffnung unsymmetrisch trichterförmig zur seitlichen Leitungsausführung und -einführung des Triaxialkabels ausgebildet. Durch die seitliche Leitungsausführung und -einführung des Triaxialkabels verringert sich vorteilhafterweise die Bauhöhe der erfindungsgemäßen Sonde.

In einer weiteren vorteilhaften Ausgestaltung der Erfindung ist der Sondenkopf konisch ausgebildet, wobei er sich in Richtung der Mess- und Stirnfläche verjüngt und die Abschirmhülse mindestens einen an ihrem Innenumfang ausgebildeten Vorsprung zur Halterung des Sondenkopfs aufweist. Damit ist eine sichere Positionierung und Befestigung des Sondenkopfes innerhalb der Abschirmhülse gewährleistet.

In weiteren vorteilhaften Ausgestaltungen der erfindungsgemäßen Sonde ist die Sonde oder der Sondenkörper und/oder der Sondenkopf in einer Distanzhülse angeordnet. Dadurch kann der Abstand zum Messobjekt variabel gestaltet werden, zudem kann durch veränderte Abstände eine Kalibrierung der Sonde ohne Weiteres vorgenommen werden. Insbesondere kann die Außenhülse der Sonde als Distanzhülse ausgebildet sein, wobei diese dann klemmbar mit dem umgebenden Gehäuse des entsprechenden Bauteils verbunden ist. Die Sonde kann ebenso an dem Gehäuse festgeschweißt sein.

Weitere Vorteile, Merkmale und Einzelheiten der Erfindung ergeben sich anhand der nachfolgenden Beschreibung zweier Ausführungsbeispiele sowie anhand der Zeichnungen. Dabei zeigt
- Figur 1: eine schematische Schnittansicht einer erfindungsgemäßen Sonde gemäß einem ersten Ausführungsbeispiel;
- Figur 2: eine schematische Schnittansicht einer erfindungsgemäßen Sonde gemäß einem zweiten Ausführungsbeispiel; und
- Figur 3: eine schematische Darstellung eines erfindungsgemäßen Spaltmesssystems.

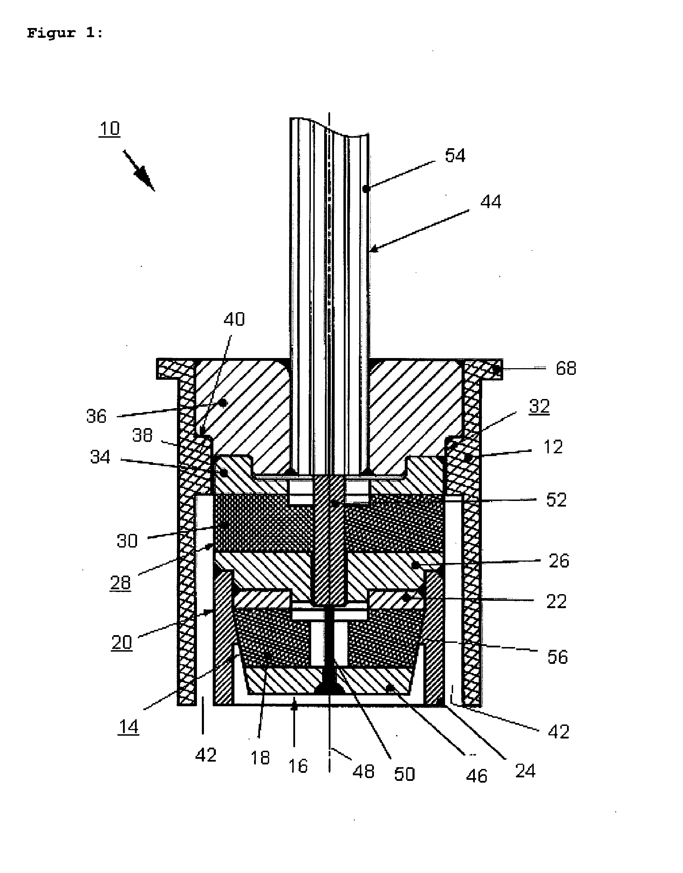

Figur 1 zeigt in einer schematischen Schnittansicht eine Sonde 10 für eine kapazitive Sensoreinrichtung gemäß einem ersten Ausführungsbeispiel. Die Sonde 10 weist dabei eine Außenhülse 12 auf, wobei innerhalb der Außenhülse 12 ein Sondenkopf 14 angeordnet ist. Die Außenhülse 12 weist an dem dem Sondenkopf 14 gegenüberliegenden Ende einen umlaufenden Schweißbund 68 auf, der variabel gestaltbar und positionierbar ist. Das Material der Außenhülse 12 kann an das Material des umgebenden Gehäuses, wie zum Beispiel dem Gehäuse einer Fluggasturbine angepasst werden.

Der Sondenkopf 14 umfasst ein Messelement 46 mit einer Mess- und Stirnfläche 16, wobei die Mess- und Stirnfläche 16 dem Messobjekt, insbesondere einem Spalt zugewandt ist. Das Messelement 46 besteht dabei aus einem Metall, einer Metall-Legierung oder einer elektrisch leitfähigen Keramik, insbesondere einer Eisen-Nickel-Kobalt-Legierung mit einem geringen thermischen Ausdehnungskoeffizienten. Es ist aber auch möglich, dass das Messelement 46 aus z. B. einer elektrisch nicht-leitfähigen Keramik besteht und nur die Mess- und Stirnfläche 16 mit dem Metall, der Metall-Legierung oder der elektrisch leitfähigen Keramik beschichtet ist. Man erkennt, dass der Sondenkopf 14 zudem ein erstes, elektrisch nicht-leitendes Isolatorelement, insbesondere aus einer nicht-leitfähigen Keramik wie AL₂O₃ sowie ein erstes Teilelement 22 einer ersten Abschirmung 20 umfasst. Das erste Teilelement 22 besteht wiederum aus einem Metall, einer Metall-Legierung oder einer elektrisch leitfähigen Keramik, insbesondere einer Eisen-Nickel-Kobalt-Legierung. Des Weiteren erkennt man, dass das Messelement 46, das erste Isolatorelement 18 und das erste Teilelement 22 der ersten Abschirmung 20 stoffschlüssig miteinander verbunden und als Schichtpaket ausgebildet sind. Dabei ist das erste Isolatorelement 18 zwischen dem Messelement 46 und dem ersten Teilelement 22 angeordnet. Die Schichtung des als Schichtpaket ausgebildeten Sondenkopfs 14 ist dabei ungefähr senkrecht zu einer Längsachse 48 der Sonde 10 ausgebildet. Zudem ist der Sondenkopf 14 in einer Abschirmhülse 24 aus Metall, einer Metall-Legierung oder einer elektrisch leitfähigen Keramik angeordnet und von dieser umgeben, wobei die Abschirmhülse 24 stoffschlüssig mit einem zweiten Teilelement 26 verbunden ist. Die stoffschlüssige Verbindung dieser Elemente kann dabei z. B. durch Laserschweißen erfolgen. In dem dargestellten Ausführungsbeispiel ist der Sondenkopf 14 zudem konisch ausgebildet, wobei er sich in Richtung der Mess- und Stirnfläche 16 verjüngt. Die Abschirmhülse 24 weist einen an ihrem Innenumfang ausgebildeten und umlaufenden Vorsprung 56 für den Einschub und zur Halterung des konisch ausgebildeten Sondenkopfes 14 auf.

Des Weiteren weist die Sonde 10 einen innerhalb der Außenhülse 12 angeordneten Sondenkörper 28 auf. Der Sondenkörper 28 besteht dabei aus einem zweiten Teilelement 26 der ersten Abschirmung 20, einem zweiten, elektrischen nicht-leitenden Isolatorelement 30 sowie einem ersten Teilelement 34 einer zweiten Abschirmung 32. Das zweite Teilelement 26 der ersten Abschirmung 20 und das erste Teilelement 34 der zweiten Abschirmung 32 bestehen dabei jeweils aus Metall, einer Metall-Legierung oder einer elektrisch leitfähigen Keramik, insbesondere einer Eisen-Nickel-Kobalt-Legierung. Das zweite Isolatorelement 30 besteht wiederum aus einer elektrisch nicht-leitfähigen Keramik, insbesondere AL₂O₃. Es ist aber auch denkbar, dass die erste und zweite Abschirmung 20, 32 aus Glas oder andren elektrischen Isolatoren bestehen. Man erkennt, dass auch der Sondenkörper 28 als Schichtpaket ausgebildet ist, wobei die einzelnen Elemente wiederum stoffschlüssig miteinander verbunden sind. Dabei ist das zweite Isolatorelement 30 zwischen dem zweiten Teilelement 26 der ersten Abschirmung 20 und dem ersten Teilelement 34 der zweiten Abschirmung 32 angeordnet. Zudem sind auch die Teilelemente 22, 26 der ersten Abschirmung 20 stoffschlüssig miteinander verbunden. Die Schichtung des ebenfalls als Schichtpaket ausgebildeten Sondenkörpers 28 ist wiederum ungefähr senkrecht zu der Längsachse 48 der Sonde 10 ausgebildet.

Die zweite Abschirmung 32 umfasst zudem ein zweites Teilelement 36, das mit dem ersten Teilelement 34 zumindest teilweise stoffschlüssig verbunden ist, wobei das zweite Teilelement 36 ebenfalls aus einem Metall, einer Metall-Legierung oder einer elektrisch leitfähigen Keramik, insbesondere einer Eisen-Nickel-Kobalt-Legierung besteht. Man erkennt, dass das zweite Teilelement 36 zudem als Halter für den Sondenkörper 28 und dem damit verbundenen Sondenkopf 14 innerhalb der Außenhülse 12 ausgebildet ist. Hierzu weist das zweite Teilelement 36 eine an seinem Außenumfang umlaufende Schulter 38 zur Auflage auf einen am Innenumfang der Außenhülse 12 ausgebildeten und umlaufenden Vorsprung auf.

Des Weiteren erkennt man, dass zwischen dem Innenumfang der Außenhülse 12 und dem Sondenkopf 14 bzw. der Abschirmhülse 24 ein radial umlaufender Spalt 42 ausgebildet ist. Der Spalt 42 erstreckt sich gemäß dem Ausführungsbeispiel bis in den Bereich des zweiten Isolatorelementes 30.

Die Materialien für das Messelement 46 mit der Mess- und Stirnfläche 16, die Elemente 22, 24, 26, 34, 36 der ersten und zweiten Abschirmung 20, 32 sowie das erste und zweite Isolatorelement 18, 30 sind in dem dargestellten Ausführungsbeispiel derart gewählt, dass sie ähnliche thermische Ausdehnungskoeffizienten besitzen. Dabei sind die thermischen Ausdehnungskoeffizienten der verwendeten Metalle, Metall-Legierungen oder der elektrisch leitfähigen Keramik an die der für die Isolatorelemente verwendeten Materialien, insbesondere der elektrisch nicht-leitfähigen Keramik angepasst.
Die Sonde 10 ist mit einem Triaxialkabel 44 verbunden, wobei das Triaxialkabel 44 wiederum mit einer entsprechenden Auswerteeinheit (nicht dargestellt) verbunden ist. Man erkennt, dass ein Innenleiter 50 des Triaxialkabels 44 mit dem Messelement 46 bzw. der Mess- und Stirnfläche 16, ein Mittelschirm 52 des Triaxialkabels 44 mit dem zweiten Teilelement 26 der ersten Abschirmung 20 und ein Außenschirm 54 des Triaxialkabels 44 mit dem zweiten Teilelement 36 der zweiten Abschirmung 32 elektrisch leitend verbunden sind. Dabei weist die Sonde 10 entlang ihrer Längsachse 48 Durchtrittsöffnungen für den Durchtritt des Innenleiters 50, des Mittelschirms 52 und des Außenschirms 54 des Triaxialkabels 54 auf. Dabei ist im Bereich des ersten Isolatorelements 18 und des ersten Teilelements 22 der ersten Abschirmung 20 der Durchmesser der Durchtrittsöffnung zumindest abschnittsweise größer als der Durchmesser des Innenleiters 50. Zudem ist im Bereich des zweiten Isolatorelementes 30 und dem ersten Teilelement 34 der zweiten Abschirmung 32 der Durchmesser der Durchtrittsöffnung ebenfalls zumindest abschnittsweise größer als der Durchmesser des Mittelschirms 52 des Koaxialkabels 44.

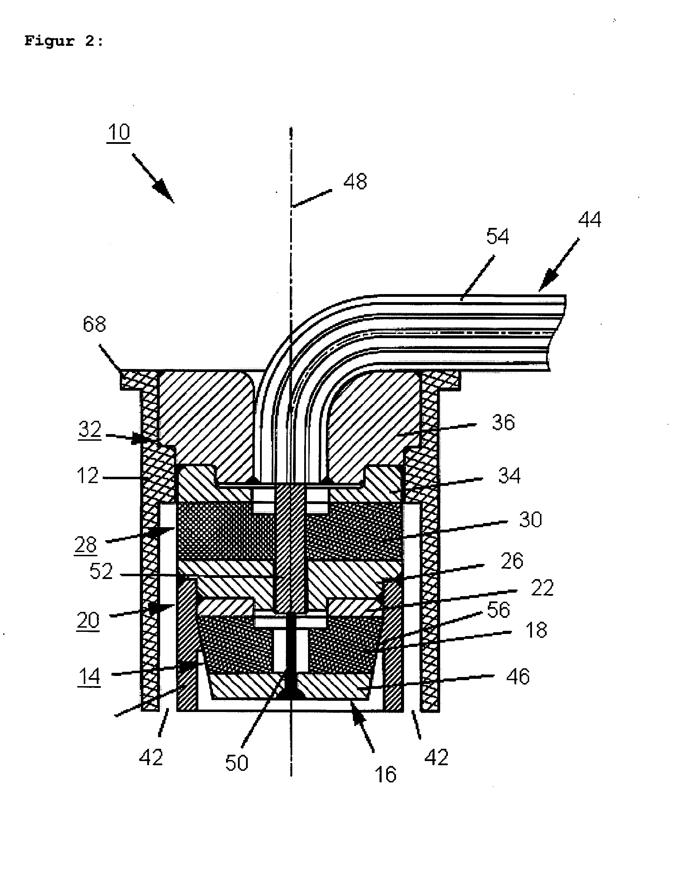

Figur 2 zeigt eine schematische Schnittansicht einer Sonde 10 gemäß einem zweiten Ausführungsbeispiel. Im Unterschied zu der Sonde gemäß dem ersten Ausführungsbeispiel ist die Durchtrittsöffnung an dem der Mess- und Stirnfläche 16 abgewandten Ende des zweiten Teilelements 36 der zweiten Abschirmung 32 unsymmetrisch trichterförmig ausgebildet. Dadurch ist eine seitliche Leitungsausführung und -einführung des Triaxialkabels 44 möglich. In allen anderen Merkmalen entspricht die Sonde 10 gemäß Figur 2 der in Figur 1 beschriebenen Sonde.

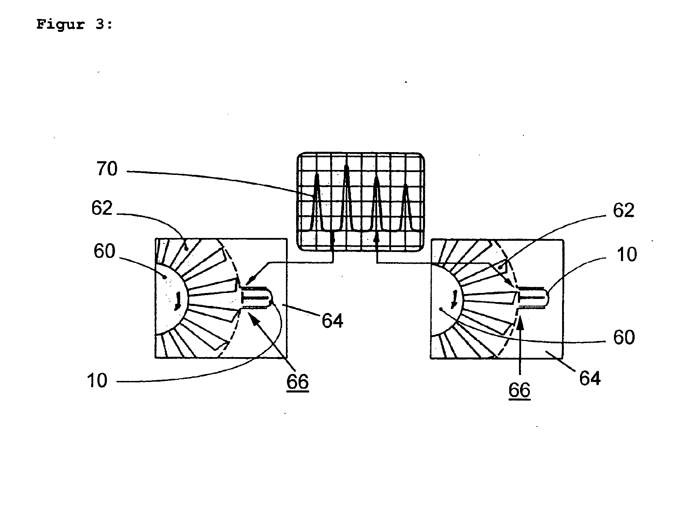

Figur 3 zeigt eine schematische Darstellung eines erfindungsgemäßen Spaltmesssystems 58. Das Spaltmesssystems 58 dient dabei zum Ermitteln eines Rotorspalts zwischen einem Rotorschaufeln 62 umfassenden Rotor 60 und einem diesen bzw. die Rotorschaufeln 62 zumindest abschnittsweise umgebenden Rotorgehäuse 64 einer Strömungsmaschine. Die Strömungsmaschine ist dabei eine Gasturbine eines Flugtriebwerks, ein Turbolader oder eine stationäre Gasturbine oder eine Dampfturbine. Das Spaltmesssystem 58 weist eine kapazitive Sensoreinrichtung 66 mit einer Elektrode und einer Gegenelektrode zum Ermitteln von den rotorspaltcharakterisierenden Kapazitätsmesswerten auf. Dabei sind der Rotor 60 bzw. die Rotorschaufeln 62 als Gegenelektrode der Sensoreinrichtung 66 schaltbar. Die Elektrode der kapazitiven Sensoreinrichtung 66 wird durch eine Sonde 10, wie sie beispielhaft in den Figuren 1 und 2 gezeigt ist gebildet. Sie bilden somit einen Kondensator, dessen Kapazitätsmesswerte C gemäß der allgemeinen Kondensatorformel C=ε₀*εᵣ*A/d mit der Größe des Rotorspalts korrespondieren. In Figur 3 ist zudem die Position der Sonde 10 relativ zu den Schaufeln 62 des Rotors 60 ersichtlich und die damit erzeugten Messsignale 70. Im linken Teil der Figur 3 ist gegenüber der Sonde 10 eine Schaufellücke und im rechten Teil der Figur 3 gegenüber der Sonde 10 eine Schaufelspitze liegend bzw. stehend. Die Drehrichtung des Rotors 60 mit den Schaufeln 62 ist jeweils durch einen Pfeil angedeutet.

Das Messsignal 70 und seine Zugehörigkeit zu einer bestimmten Position der Schaufel 62 zur Sonde 10 sind ebenfalls durch Pfeile gekennzeichnet. Jeweils in der Mitte einer Lücke zwischen den Schaufeln 62 ist das Messsignal am kleinsten und beim kleinsten Abstand zwischen der Schaufel 62 bzw. deren Schaufelspitze und der Sonde 10 am höchsten.

Eine erfindungsgemäße Sonde kann in anderen Anwendungsfällen abhängig von dem elektronischen Sondentreiber und/oder der Messwerterfassung auch den Spalt zu glatten Oberflächen messen.

## Patentansprüche

1. Sonde (10) für eine kapazitive Sensoreinrichtung, mit einer Außenhülse (12) und mit mindestens einem innerhalb der Außenhülse (12) angeordneten Sondenkopf (14), der Sondenkopf (14) umfassend ein Messelement (46) mit mindestens einer Mess- und Stirnfläche (16), wobei das Messelement (46) aus einem Metall, einer Metall-Legierung oder einer elektrisch leitfähigen Keramik besteht oder zumindest an der Mess- und Stirnfläche (16) mit einem Metall, einer Metall-Legierung oder einer elektrisch leitfähigen Keramik beschichtet ist, und umfassend ein erstes, elektrisch nicht-leitendes Isolatorelement (18) sowie ein erstes Teilelement (22) einer ersten Abschirmung (20), wobei das erste Teilelement (22) aus einem Metall, einer Metall-Legierung oder einer elektrisch leitfähigen Keramik besteht, und wobei das Messelement (46), das erste Isolatorelement (18) und das erste Teilelement (22) der ersten Abschirmung (20) stoffschlüssig miteinander zu einem Schichtpaket verbunden sind, wobei das erste Isolatorelement (18) zwischen dem Messelement (46) mit der Mess- und Stirnfläche (16) und dem ersten Teilelement (22) angeordnet ist, **dadurch gekennzeichnet, dass** das Messelement (46), das erste Isolatorelement (18) und das erste Teilelement (22) bezüglich einer Längsachse (48) der Sonde (10) koaxial sowie axial aufeinander folgend ohne gegenseitige axiale Überlappung angeordnet sind, wobei zwischen dem Innenumfang der Außenhülse (12) und dem Sondenkopf (14) ein radial umlaufender Spalt (42) ausgebildet ist.

2. Sonde nach Anspruch 1, **dadurch gekennzeichnet, dass** der Sondenkopf (14) in einer einen Teil der Sonde bildenden Abschirmhülse (24) aus Metall, einer Metall-Legierung oder einer elektrisch leitfähigen Keramik angeordnet und von dieser umgeben ist, wobei die Abschirmhülse (24) stoffschlüssig mit einem zweiten Teilelement (26) der ersten Abschirmung (20) verbunden ist und zu dem Messelement (46) und zumindest zu einem Teil des ersten Isolatorelements (18) einen umlaufenden Radialspalt aufweist.

3. Sonde nach einem der Ansprüche 1 oder 2, **dadurch gekennzeichnet, dass** die Sonde (10) einen innerhalb der Außenhülse (12) angeordneten Sondenkörper (28) aufweist, wobei der Sondenkörper (28) ein zweites Teilelement (26) der ersten Abschirmung (20) bestehend aus einem Metall, einer Metall-Legierung oder einer elektrisch leitfähigen Keramik, ein zweites, elektrisch nicht-leitendes Isolatorelement (30) sowie ein erstes Teilelement (34) einer zweiten Abschirmung (32), wobei das erste Teilelement (34) aus einem Metall, einer Metall-Legierung oder einer elektrisch leitfähigen Keramik besteht, umfasst und das zweite Teilelement (26) der ersten Abschirmung (20), das zweite Isolatorelement (30) und das erste Teilelement (34) der zweiten Abschirmung (32) stoffschlüssig miteinander verbunden und als axiales Schichtpaket ausgebildet sind, wobei das zweite Isolatorelement (30) axial zwischen dem zweiten Teilelement (26) der ersten Abschirmung (20) und dem ersten Teilelement (34) der zweiten Abschirmung (32) angeordnet ist.

4. Sonde nach Anspruch 3, **dadurch gekennzeichnet, dass** das erste Teilelement (22) und das zweite Teilelement (26) der ersten Abschirmung (20) stoffschlüssig miteinander verbunden sind.

5. Sonde nach Anspruch 3 oder 4, **dadurch gekennzeichnet, dass** die Schichten des als Schichtpaket ausgebildeten Sondenkörpers (28) ungefähr senkrecht zu der Längsachse (48) der Sonde (10) verlaufen.

6. Sonde nach Anspruch 3, 4 oder 5, **dadurch gekennzeichnet, dass** das erste Teilelement (34) der zweiten Abschirmung (32) mit einem zweiten Teilelement (36) der zweiten Abschirmung (32) zumindest teilweise stoffschlüssig verbunden ist und das zweite Teilelement (36) aus einem Metall, einer Metall-Legierung oder einer elektrisch leitfähigen Keramik besteht, wobei das zweite Teilelement (36) als Halter für den Sondenkörper (28) und den damit verbundenen Sondenkopf (14) innerhalb der Außenhülse (12) ausgebildet ist.

7. Sonde nach Anspruch 6, **dadurch gekennzeichnet, dass** das zweite Teilelement (36) mindestens eine, zumindest teilweise an seinem Außenumfang umlaufende Schulter (38) zur Auflage auf mindestens eine am Innenumfang der Außenhülse (12) ausgebildeten Vorsprung (40) aufweist.

8. Sonde nach einem der Ansprüche 2 bis 7, **dadurch gekennzeichnet, dass** zwischen dem Innenumfang der Außenhülse (12) und der Abschirmhülse (24) ein radial umlaufender Spalt (42) ausgebildet ist.

9. Sonde nach Anspruch 8, **dadurch gekennzeichnet, dass** sich der Spalt (42) zumindest bis in den Bereich des zweiten Isolatorelements (30) erstreckt.

10. Sonde nach einem der Ansprüche 3 bis 9, **dadurch gekennzeichnet, dass** das erste Isolatorelement (18) und das zweite Isolatorelement (30) aus oder einer elektrisch nichtleitfähigen Keramik, insbesondere Al₂O₃. oder Glas bestehen.

11. Sonde nach einem der Ansprüche 3 bis 10, **dadurch gekennzeichnet, dass** die Materialien für das Messelement (46), die Mess- und Stirnfläche (16), die Elemente (22, 24, 26, 34, 36) der ersten und zweiten Abschirmung (20, 32) sowie das erste und zweite Isolatorelement (18, 30) derart gewählt sind, dass sie ähnliche thermische Ausdehnungskoeffizienten besitzen.

12. Sonde nach Anspruch 11, **dadurch gekennzeichnet, dass** das Material für das Messelement (46), die Mess- und Stirnfläche (16) und die Elemente (22,24,26,34,36) der ersten und zweiten Abschirmung (20, 32) eine Eisen-Nickel-Kobalt-Legierung mit einem geringen thermischen Ausdehnungskoeffizienten ist.

13. Sonde nach einem der Ansprüche 3 bis 12, **dadurch gekennzeichnet, dass** die Elemente (46, 18, 22) des Sondenkopfs (14) und/oder die Elemente (26, 30, 34) des Sondenkörpers (28) vakuumgelötet sind.

## Claims

1. Probe (10) for a capacitive sensor device, having an outer sleeve (12) and having at least one probe head (14) arranged within the outer sleeve (12), the probe head (14) comprising a measuring element (46) having at least one measuring and front surface (16), wherein the measuring element (46) consists of a metal, a metal alloy or an electrically conductive ceramic, or is coated, at least on the measuring and front surface (16), with a metal, a metal alloy or an electrically conductive ceramic, and comprising a first, non-electrically conductive insulating element (18) as well as first partial element (22) of a first screen (20), wherein the first partial element (22) consists of a metal, a metal alloy or an electrically conductive ceramic, and wherein the measuring element (46), the first insulating element (18) and the first partial element (22) of the first screen (20) are connected firmly to one another to form a layer package, wherein the first insulating element (18) is arranged between the measuring element (46) with the measuring and front surface (16) and the first partial element (22), **characterised in that** the measuring element (46), the first insulating element (18) and the first partial element (22) are arranged, with respect to a longitudinal axis (48) of the probe (10), coaxially and axially successively without mutual axial overlapping, wherein a radially peripheral gap (42) is formed between the inner periphery of the outer sleeve (12) and the probe head (14).

2. Probe according to claim 1, **characterised in that** the probe head (14) is arranged in, and enclosed by, a screening sleeve (24) forming one part of the probe, said sleeve being made from metal, a metal alloy or an electrically conductive ceramic, wherein the screening sleeve (24) is firmly connected to a second partial element (26) of the first screen (20) and has a peripheral radial gap to the measuring element (46) and at least to one part of the first insulating element (18).

3. Probe according to one of claims 1 or 2, **characterised in that** the probe (10) has a probe body (28) arranged within the outer sleeve (12), wherein the probe body (28) comprises a second partial element (26) of the first screen (20) consisting of a metal, a metal alloy or an electrically conductive ceramic, a second, non-electrically conductive insulating element (30) and a first partial element (34) of a second screen (32), wherein the first partial element (34) consists of a metal, a metal alloy or an electrically conductive ceramic, and the second partial element (26) of the first screen (20), the second insulating element (30) and the first partial element (34) of the second screen (32) are connected firmly to one another and are formed as an axial layer package, wherein the second insulating element (30) is arranged axially between the second partial element (26) of the first screen (20) and the first partial element (34) of the second screen (32).

4. Probe according to claim 3, **characterised in that** the first partial element (22) and the second partial element (26) of the first screen (20) are connected firmly to each other.

5. Probe according to claim 3 or 4, **characterised in that** the layers of the probe body (28) formed as the layer package run approximately perpendicular relative to the longitudinal axis (48) of the probe (10).

6. Probe according to claim 3, 4 or 5, **characterised in that** the first partial element (34) of the second screen (32) is at least partially firmly connected to a second partial element (36) of the second screen (32) and the second partial element (36) consists of a metal, a metal alloy or an electrically conductive ceramic, wherein the second partial element (36) is formed within the outer sleeve (12) as a holder for the probe body (28) and the probe head (14) connected thereto.

7. Probe according to claim 6, **characterised in that** the second partial element (36) has at least one collar (38) that at least partially circulates on its outer periphery for support on at least one projection (40) formed on the inner periphery of the outer sleeve (12).

8. Probe according to one of claims 2 to 7, **characterised in that** a radially peripheral gap (42) is formed between the inner periphery of the outer sleeve (12) and the screening sleeve (24).

9. Probe according to claim 8, **characterised in that** the gap (42) extends at least into the region of the second insulating element (30).

10. Probe according to one of claims 3 to 9, **characterised in that** the first insulating element (18) and the second insulating element (30) consist of either a non-electrically conductive ceramic, in particular Al₂O₃, or glass.

11. Probe according to one of claims 3 to 10, **characterised in that** the materials for the measuring element (46), the measuring and front surface (16), the elements (22, 24, 26, 34, 36) of the first and second screen (20, 32) and the first and second insulating element (18, 30) are selected in such a way that they possess similar thermal coefficients of expansion.

12. Probe according to claim 11, **characterised in that** the material for the measuring element (46), the measuring and front surface (16) and the elements (22, 24, 26, 34, 36) of the first and second screen (20, 32) is an iron-nickel-cobalt alloy having a low thermal expansion coefficient.

13. Probe according to one of claims 3 to 12, **characterised in that** the elements (46, 18, 22) of the probe head (14) and/or the elements (26, 30, 34) of the probe body (28) are vacuum-soldered.

## Revendications

1. Sonde (10) pour un dispositif de détection capacitif, avec une enveloppe extérieure (12) et au moins une tête de sonde (14) disposée à l'intérieur de l'enveloppe extérieure (12), ladite tête de sonde (14) comprenant un élément de mesure (46) avec au moins une surface de mesure frontale (16), où l'élément de mesure (46) est en métal, en alliage métallique ou en céramique électro-conductrice ou est revêtu d'un métal, d'un alliage métallique ou de céramique électro-conductrice au moins sur la surface de mesure frontale (16), et comprenant un premier élément isolant (18) non électro-conducteur ainsi qu'un premier élément partiel (22) d'un premier blindage (20), où le premier élément partiel (22) est en métal, en alliage métallique ou en céramique électro-conductrice, et où l'élément de mesure (46), le premier élément isolant (18) et le premier élément partiel (22) du premier blindage (20) sont reliés entre eux par liaison de matière et réalisés sous forme de noyau feuilleté, où le premier élément isolant (18) est disposé entre l'élément de mesure (46) avec la surface de mesure frontale (16) et le premier élément partiel (22), **caractérisée en ce que** l'élément de mesure (46), le premier élément isolant (18) et le premier élément partiel (22) sont coaxiaux par rapport à un axe longitudinal (48) de la sonde (10) et axialement consécutifs sans chevauchement axial réciproque, un interstice (42) radialement continu étant présenté entre le contour intérieur de l'enveloppe extérieure (12) et la tête de sonde (14).

2. Sonde selon la revendication 1, **caractérisée en ce que** la tête de sonde (14) est disposée dans une enveloppe de blindage (24) en métal, en alliage métallique ou en céramique électro-conductrice formant une partie de la sonde, et est entourée par celle-ci, ladite enveloppe de blindage (24) étant reliée par liaison de matière à un deuxième élément partiel (26) du premier blindage (20) et présentant un interstice radial continu par rapport à l'élément de mesure (46) et à au moins une partie du premier élément isolant (18).

3. Sonde selon la revendication 1 ou 2, ladite sonde (10) étant **caractérisée en ce qu'**elle présente un corps de sonde (28) disposé à l'intérieur de l'enveloppe extérieure (12), ledit corps de sonde (28) comprenant un deuxième élément partiel (26) du premier blindage (20) en métal, en alliage métallique ou en céramique électro-conductrice, un deuxième élément isolant (30) non électro-conducteur ainsi qu'un premier élément partiel (34) d'un deuxième blindage (32), le premier élément partiel (34) étant en métal, en alliage métallique ou en céramique électro-conductrice, et **en ce que** le deuxième élément partiel (26) du premier blindage (20), le deuxième élément isolant (30) et le premier élément partiel (34) du deuxième blindage (32) sont reliés entre eux par liaison de matière et réalisés sous forme de noyau feuilleté, le deuxième élément isolant (30) étant disposé axialement entre le deuxième élément partiel (26) du premier blindage (20) et le premier élément partiel (34) du deuxième blindage (32).

4. Sonde selon la revendication 3, **caractérisée en ce que** le premier élément partiel (22) et le deuxième élément partiel (26) du premier blindage (20) sont reliés entre eux par liaison de matière.

5. Sonde selon la revendication 3 ou 4, **caractérisée en ce que** les couches du corps de sonde (28) réalisé sous forme de noyau feuilleté sont sensiblement perpendiculaires à l'axe longitudinal (48) de la sonde (10).

6. Sonde selon la revendication 3, 4 ou 5, **caractérisée en ce que** le premier élément partiel (34) du deuxième blindage (32) est relié au moins partiellement par liaison de matière à un deuxième élément partiel (36) du deuxième blindage (32), et le deuxième élément partiel (36) est en métal, en alliage métallique ou en céramique électro-conductrice, le deuxième élément partiel (36) étant réalisé comme support pour le corps de sonde (28) et la tête de sonde (14) qui lui est reliée à l'intérieur de l'enveloppe extérieure (12).

7. Sonde selon la revendication 6, **caractérisée en ce que** le deuxième élément partiel (36) présente au moins un épaulement (38), au moins partiellement présenté sur son contour extérieur pour appui sur au moins une saillie (40) formée sur le contour intérieur de l'enveloppe extérieure (12).

8. Sonde selon l'une des revendications 2 à 7, **caractérisée en ce qu'**un interstice (42) radialement continu est présenté entre le contour intérieur de l'enveloppe extérieure (12) et l'enveloppe de blindage (24).

9. Sonde selon la revendication 8, **caractérisée en ce que** l'interstice (42) s'étend au moins jusqu'au niveau du deuxième élément isolant (30).

10. Sonde selon l'une des revendications 3 à 9, **caractérisée en ce que** le premier élément isolant (18) et le deuxième élément isolant (30) sont en céramique non électro-conductrice, en particulier en Al₂O₃ ou en verre.

11. Sonde selon l'une des revendications 3 à 10, **caractérisée en ce que** les matériaux pour l'élément de meure (46), la surface de mesure frontale (16), les éléments (22, 24, 26, 34, 36) des premier et deuxième blindages (20, 32) ainsi que les premier et deuxième éléments isolants (18, 30) sont sélectionnés pour qu'ils présentent le même coefficient de dilatation thermique.

12. Sonde selon la revendication 11, **caractérisée en ce que** le matériau pour l'élément de mesure (46), la surface de mesure frontale (16) et les éléments (22, 24, 26, 34, 36) des premier et deuxième blindages (20, 32) est un alliage fer-nickel-cobalt avec un faible coefficient de dilatation thermique.

13. Sonde selon l'une des revendications 3 à 12, **caractérisée en ce que** les éléments (46, 18, 22) de la tête de sonde (14) et/ou les éléments (26, 30, 34) du corps de sonde (28) sont brasés sous vide.
